Europäisches Patentamt

European Patent Office

Office européen des brevets

(19)

(11) Publication number: **0 084 687**
A1

(12) **EUROPEAN PATENT APPLICATION**

(21) Application number: 82200785.2

(22) Date of filing: 25.06.82

(51) Int. Cl.³: **B 62 D 11/08**, B 60 T 1/06

(30) Priority: 30.06.81 IT 2222481

(43) Date of publication of application: 03.08.83
Bulletin 83/31

(84) Designated Contracting States: AT CH DE FR GB LI

(71) Applicant: SAME S.p.A., Viale F. Cassani, 14,
I-24047 Treviglio Bergamo (IT)

(72) Inventor: Sonzogni, Franco, Via Trieste, 12,
I-24040 Canonica d'Adda Bergamo (IT)

(74) Representative: Martegani, Franco et al, Ing. Barzanò &
Zanardo Milano S.p.A. Via Borgonuovo, 10,
I-20121 Milano (IT)

(54) **Four wheel drive agricultural tractor with improved braking system.**

(57) A four wheel drive agricultural tractor, at least two of
which wheels being steerable wheels, with two axles each
provided with a differential and with final reduction gears
downstream of the differential, in which each wheel is
equipped with a braking element in an intermediate position
between said differentials and said final reduction gears,
the two pairs of braking elements of the right front and rear
wheels and of the left front and rear wheels being operatively connected to respective actuating means which can be
controlled independently, so that the independent braking
action on the right or left front and rear wheels causes a
lateral skidding of the wheels and thus a sharper turning
trajectory of the vehicle than would be caused by the simple
turning of the steerable wheels to right or to left.

ACTORUM AG

FOUR WHEEL DRIVE AGRICULTURAL TRACTOR WITH

IMPROVED BRAKING SYSTEM . -

In wheeled tractors, provision is normally made for braking one of the rear drive wheels at will in order to lessen the need for front wheel steer; this brings the advantage of easier and less extensive tractor manoeuvering in restricted spaces, when this is required.

The effect in question is caused by the differential movement imparted to the rear drive wheels where the braking of the wheel on the inside of the turning circle is intensified - if wished to the point of locking the wheel - so that the movement of the outer wheel is accelerated; the result of this is a force which causes the tractor to move with lateral skid with respect to the plane of symmetry of the wheels: this assists in making sharper turns.

Decisive factors in obtaining the said effect are the ratio of weight and adherence between the front and rear axles and the ratio between wheelbase and rear wheel track.

It follows that the effect of sharper turning is more evident in tractors in which the front axle is not a drive axle than in tractors in which the front axle

2. 0084687

is also a drive axle and thus heavier and with larger wheels.

The object of the present invention is to obtain a greater lateral skid effect on the wheels of a four wheel drive tractor. To this end, according to the invention, brakes are mounted on all the wheels and braking can be controlled alternatively in respect of the right or left rear and front wheels according as it is wished to turn to the right or to the left.

For enhanced braking efficiency it is advisable, if not indispensable, that the braking action should come to bear on a shaft which rotates faster than the axle shaft, whereas for the turning effect to be obtained it is essential that the braking action should come to bear after the differential towards the wheels.

The solution which the present invention proposes, in non-restrictive manner, places the braking devices upstream of the final reduction gears of the front and rear axles of a four wheel drive tractor, with separate pedal operation for braking right and left wheels and with a pedal-lock device for simultaneous braking of the wheels.

In said tractor, when the independent operating pedal for braking the right or left wheels is depressed there is a lateral skidding of the wheels, resulting in a smaller turning radius than would be the case with the mere turning of the more or less steered wheels.

In particular the front wheel brake, of a type already known, is of straightforward conception, small in bulk and of contained cost, and is inserted in a logical manner in a front axle transmission described and illustrated in the British Patent Appln. No. 8116488 filed on May 29, 1981 in the name of the Applicant Company.

The structural and functional characteristics of the invention, and its advantages over the known art, will become even more evident from the following exemplifying description referred to the attached drawings, in which :

· FIGURE 1 is a schematic view of a tractor embodied according to the invention;

FIGURE 2 is an enlarged section illustrating the brake mounted on a front wheel.

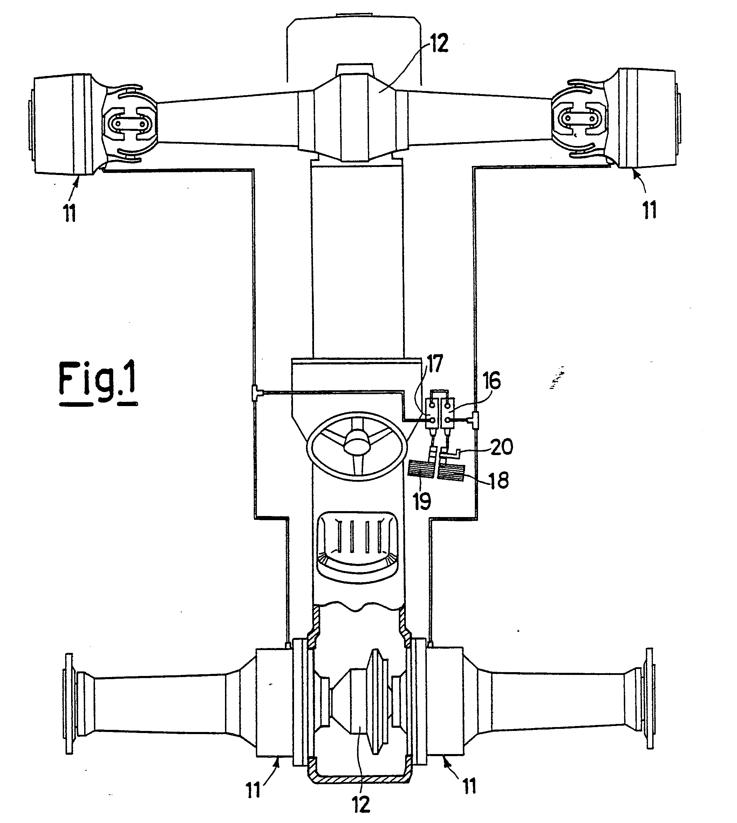

The tractor shown in FIGURE 1 is of the four wheel drive type, at least two of such wheels - for example the front wheels - being steerable.

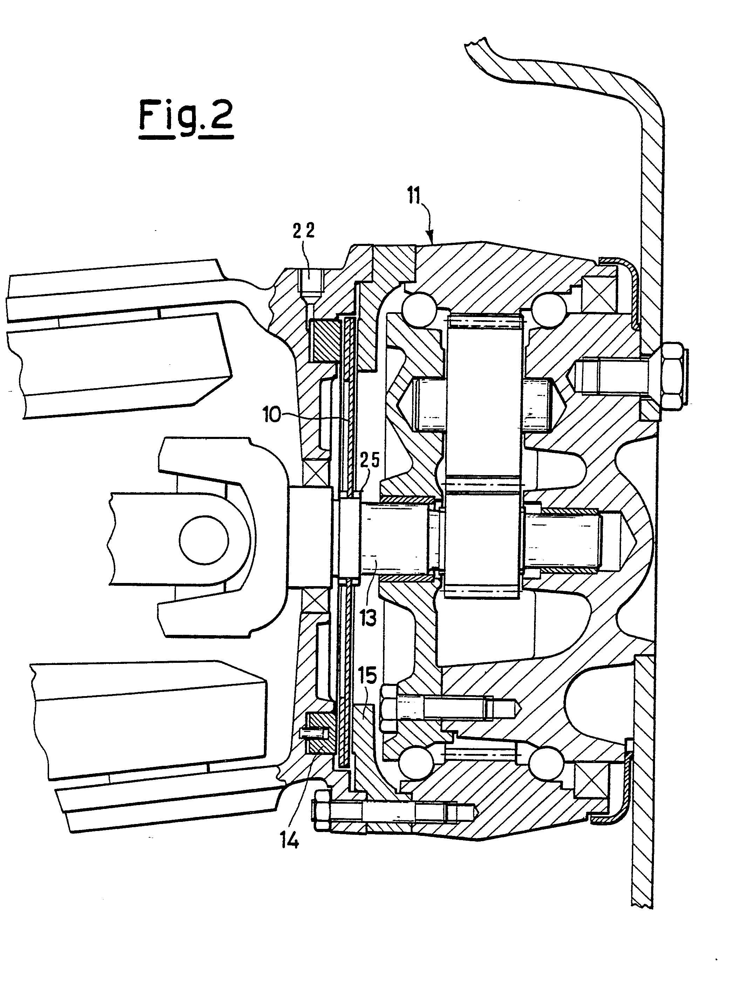

Said wheels are all mounted on hubs comprising an epicyclic reduction gear such as the one shown in the detail of FIGURE 2 and forming subject matter of the British Patent Appln.No.8116488 , to which reference may be had for clarifications if required.

According to the present invention, in a tractor of the type described above, provision is made for a braking system which comprises, for each wheel, a disc brake 10 mounted within the housing of the epicyclic reduction gear and upstream of the latter, i.e. between the differential 12 and the reduction gear train.

0084687

The disc 10 is assembled to the drive shaft 13 and is braked by means of an annular piston 14 which clamps it against a ledge 15 of the fixed housing 11.

According to the invention the brakes of the pairs of right and left wheels can be actuated simultaneously by means of respective hydraulic cylinders 16,17, provided with pedal controls 18 and 19.

When the wheels are steered, said pedals 18, 19, can be depressed independently of each other to brake the pair of right and left wheels, so as to assist in making sharper turns as the result of a lateral skidding of the wheels. On the other hand, when the tractor is moving normally, the said pedals can be locked by a brake pedal lock 20 so as to cause a simultaneous braking action in respect of all four wheels.

The particular structure of the brake is worth noting, as it is equipped with an annular piston 14, which receives a fluid under pressure from 22 to be urged against the disc 10 to press it against the fixed jaw 15.

The disc 10 is mounted slidably on the clutch 25 of the input shaft 13 of the epicyclical reducing gear (conventional) which is held in the box 11. By so doing, the braking torque on the speedier shaft is smaller,whereas the oil contained in the reducing gear sump contibutes towards the cooling of the brake. The brake structure is thus cheap and permits a correct assemblage of the disc, the actuating ram and the confronting surface 15.

C L A I M S :

1.    A four wheel drive agricultural tractor, at least two of which wheels being steerable wheels, with two axles each provided with a differential and with final reduction gears downstream of the differential, in which each wheel is equipped with a braking element in an intermediate position between said differentials and said final reduction gears, the two pairs of braking elements of the right front and rear wheels and of the left front and rear wheels being operatively connected to respective actuating means which can be controlled independently, so that the independent braking action on the right or left front and rear wheels causes a lateral skidding of the wheels and thus a sharper turning trajectory of the vehicle than would be caused by the simple turning of the steerable wheels to right or to left.

2.    A tractor according to Claim 1, characterized in that said two pairs of braking elements are hydraulically operated with pressure generated by respective cylinders actuated by respective pedal controls.

3.    A tractor according to Claim 1, characterized in that said end reducing gears are mounted within a box in the wall of which corresponding to the motion input side an annular seating is formed in which a hydraulic piston slides to act upon a disc slidably inserted onto the motion input shaft of the reducing gear, to urge said piston against a confronting surface integral with the reducing gear box.

2.    0084687

4.    An agricultural tractor according to Claim 1, characterized in that said braking elements consist of a rotating disc or discs solid with the wheels, which discs are braked between walls solid with the tractor bodywork, as the result of the axial force generated by an annular piston actuated by hydraulic pressure.

5.    A tractor according to Claim 2, characterized in that the said pedal controls can be operatively locked together.

**Fig.1**

# Fig.2

European Patent
Office

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | GB-A-1 242 018  (GIRLING LTD.)<br>*From  beginning  to page 2, line 27* | 1,2,5 | B 62 D   11/08<br>B 60 T    1/06 |
| Y | | 3,4 | |
| Y | US-A-4 142 615  (P.SIDLES et al.)<br>*Column 1, lines 45-68* | 3,4 | |
| X | FR-A-1 231 439  (D.MacNEIL TORRANCE)<br>*Abstract* | 1,5 | |
| Y | | 3,4 | |

| | | | TECHNICAL FIELDS SEARCHED (Int. Cl. ³) |
|---|---|---|---|
| Y | US-A-4 037 694  (B.W.KEESE)<br>*Column  1,  line 57 to column 2, line 35* | 3,4 | B 62 D<br>B 60 T |
| X | FR-A-2 122 609  (INTERNATIONAL HARVESTER)<br>*From  beginning  to page 2, line 12* | 1,2,5 | |
| Y | | 3,4 | |
| Y | GB-A-1 434 845  (HAMWORTHY ENG.)<br>*Page 1* | 3,4 | |

-/-

The present search report has been drawn up for all claims

| Place of search | Date of completion of the search | Examiner |
|---|---|---|
| THE HAGUE | 06-10-1982 | CINQUANTINI B. |

European Patent
Office

**EUROPEAN SEARCH REPORT**

0084687
Application number

EP  82 20 0785

| | DOCUMENTS CONSIDERED TO BE RELEVANT | | Page  2 |
|---|---|---|---|

| Category | Citation of document with indication. where appropriate, of relevant passages | Relevant to claim | CLASSIFICATION OF THE APPLICATION (Int. Cl. ³) |
|---|---|---|---|
| X | US-A-2 556 287   (A.N.MILSTER) *Columns 1-3* | 1,2,5 | |
| Y | | 3,4 | |
| Y | GB-A-1 483 731   (KIRKSTALL FORGE ENG. LTD.) *From  beginning  to page 2, line 35* | 3,4 | |
| X,E | EP-A-0 042 668   (LUCAS INDUSTRIES) *Page 1* | 1,2,5 | |
| X | US-A-2 741 337   (J.F.ZISKAL) *Columns 2-4* | 1,2,5 | |
| A | US-A-2 894 608   (R.A.WITTREN) *Column 1, lines 15-45* | 1,2 | TECHNICAL FIELDS SEARCHED (Int. Cl. ³) |
| A | US-A-2 816 422   (E.H.FLETCHER) *Column 1, lines 15-62* | 1,2,3,4 | |
| A | US-A-2 540 058   (D.ROEDER et al.) *Column 1 to column 2, line 35* | 1 | |
| A | US-A-2 497 293   (W.M.CADE) *Column 1, lines 1-51* | 1,5 | |

-/-

The present search report has been drawn up for all claims

| Place of search | Date of completion of the search | Examiner |
|---|---|---|
| THE HAGUE | 06-10-1982 | CINQUANTINI B. |

European Patent Office

**EUROPEAN SEARCH REPORT**

0084687

Application number

EP 82 20 0785

| | DOCUMENTS CONSIDERED TO BE RELEVANT | | Page 3 |
|---|---|---|---|

| Category | Citation of document with indication. where appropriate, of relevant passages | Relevant to claim | CLASSIFICATION OF THE APPLICATION (Int. Cl. 3) |
|---|---|---|---|
| A | US-A-2 474 961 (J.SNEED) *Column 1, lines 1-32* | 1 | |
| A | US-A-3 143 000 (A.J.WILSON) *Column 1, lines 10-53* | 1,4 | |
| A | US-A-2 597 109 (R.A.KROPP) | | |
| A | US-A-3 429 392 (N.J.RYSKAMP) | | |
| A | US-A-3 834 769 (J.O.JUST) | | |
| A | GB-A-2 026 962 (K.K.TOYODA JIDOSHOKKI SEISAKUSHO) | | TECHNICAL FIELDS SEARCHED (Int. Cl. 3) |
| A | US-A-3 834 498 (H.E.ASHFIELD) | | |

The present search report has been drawn up for all claims

| Place of search | Date of completion of the search | Examiner |
|---|---|---|
| THE HAGUE | 06-10-1982 | CINQUANTINI B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on. or after the filing date
D : document cited in the application
L : document cited for other reasons

& : member of the same patent family, corresponding document

EPO Form 1503. 03 82